# EUROPEAN PATENT APPLICATION

(11) **EP 3 098 945 A1**
(43) Date of publication of application: **30.11.2016**
(21) Application number: 15740589.5
(22) Date of filing: 07.01.2015
(51) Int. Cl.: H02K 3/02

(54) **THREE-PHASE MOTOR**

(30) Priority: 22.01.2014 JP 2014009185
(71) Applicant: Panasonic Intellectual Property Management Co., Ltd., Osaka-shi, Osaka 570-6207 (JP)
(72) Inventor: OGAWA, Kuniyuki, Osaka-shi, Osaka 540-6207 (JP)
(74) Representative: Schwabe - Sandmair - Marx
(86) International application number: PCT/JP2015/000021
(87) International publication number: WO 2015/111369

(57) **Abstract**

A three-phase motor according to the present invention includes: stator core (19), outer layer coil (10), inner layer coil (12), and intermediate layer coil (11). Inner layer coil (12) is located closer to center axis (20) than outer layer coil (10). Intermediate layer coil (11) is located between outer layer coil (10) and inner layer coil (12). Outer layer coil (10) is formed of a wire rod having a higher mechanical strength than those of inner layer coil (12) and intermediate layer coil (11). Outer layer coil (10) is formed of a copper wire. Inner layer coil (12) and intermediate layer coil (11) are formed of aluminum wires.

## Description

### TECHNICAL FIELD

The present invention relates to a three-phase motor including coils formed of different wire rods, and more particularly, to a positional relationship between the coils.

### BACKGROUND ART

Coils formed of one kind of wire rod have been conventionally used as a stator included in a three-phase motor. In general, a typical wire rod for an electric wire used for a coil is a copper wire.

In recent years, a price of copper has risen. In view of this, in order to suppress the cost of an electric wire used for a coil and reduce the weight of a motor, a wire rod different from a copper wire is used. Examples of wire rods different from a copper wire include an aluminum wire. The aluminum wire is light in weight and low in cost in comparison with the copper wire.

However, conductivity of an aluminum wire is lower than that of a copper wire. Therefore, in the case where all copper wires used for a motor are replaced with aluminum wires, a heat generation amount of the coil excessively increases. Thus, the motor in which all of the copper wires are replaced with aluminum wires has a problem in that the temperature of the motor excessively increases.

In order to solve the above-described problem, a method disclosed in PTL 1 has been proposed. Specifically, PTL 1 discloses using electric wires of different wire rods in combination in a single motor.

The outline of the method disclosed in PTL 1 is described with reference to FIGS. 6A, 6B, and 7.

As shown in FIGS. 6A and 6B, in stator 13a included in a three-phase motor disclosed in PTL 1, an electric wire is wound around tooth portion 42 that constitutes a tooth. An electric wire around tooth portion 42 forms a coil that is a winding portion. In the electric wire forming the coil, aluminum wire 40 is used as a part of a wire rod, and copper wire 41 is used as a remaining portion of the wire rod.

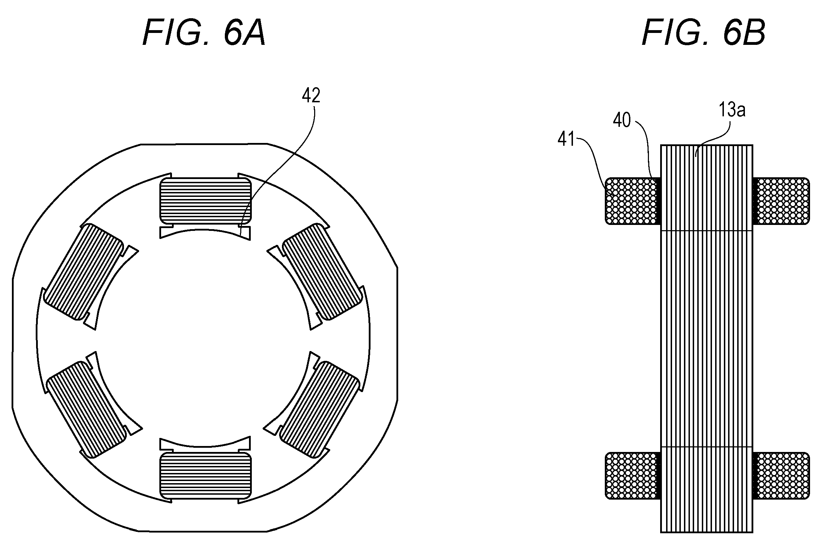

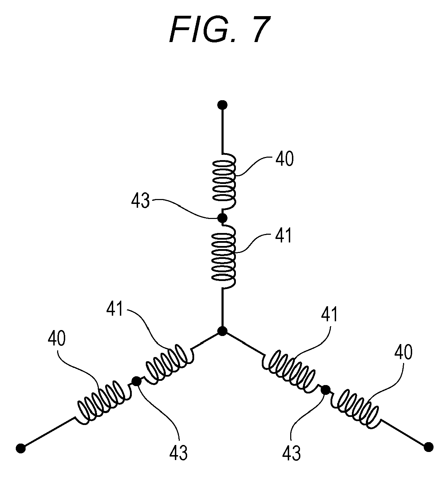

As shown in FIG. 7, copper wire 41 is connected in series to aluminum wire 40 at connection portion 43. As shown in FIGS. 6A and 6B, aluminum wire 40 is wound near tooth portion 42. Copper wire 41 is wound around an upper portion of aluminum wire 40, which is wound around tooth portion 42.

With this configuration, heat generated at aluminum wire 40 whose temperature becomes high is transmitted to tooth portion 42. Thus, non-uniform heat generated at the entire three-phase motor is suppressed.

### Citation List

### Patent Literature

PTL 1: Unexamined Japanese Patent Publication No. 2010-183788

### SUMMARY OF THE INVENTION

A three-phase motor targeted by the present invention includes a stator core, an outer layer coil, an inner layer coil, and an intermediate layer coil.

The stator core includes a plurality of teeth, a first slot, a second slot, and a third slot. The plurality of teeth extend toward a center axis. The first slot, the second slot, and the third slot are positioned between adjacent teeth out of the plurality of teeth. The stator core extends in the direction of the center axis.

The outer layer coil is inserted into the first slot.

The inner layer coil is located closer to the center axis than the outer layer coil in a direction perpendicular to the center axis. The inner layer coil is inserted into the second slot.

The intermediate layer coil is located between the outer layer coil and the inner layer coil in the direction perpendicular to the center axis. The intermediate layer coil is inserted into the third slot.

In particular, the outer layer coil is formed of a wire rod having a higher mechanical strength than those of the inner layer coil and the intermediate layer coil.

### BRIEF DESCRIPTION OF DRAWINGS

FIG. 1A is a front view showing a stator included in a three-phase motor according to a first exemplary embodiment of the present invention.
FIG. 1B is a cross-sectional view showing essential parts of the stator included in the three-phase motor according to the first exemplary embodiment of the present invention.
FIG. 2A is a model diagram illustrating star connection in a winding used for the stator included in the three-phase motor according to the first exemplary embodiment of the present invention.
FIG. 2B is a model diagram illustrating delta connection in a winding used for the stator included in the three-phase motor according to the first exemplary embodiment of the present invention.
FIG. 3 is a front view showing a stator core used for the stator included in the three-phase motor according to the first exemplary embodiment.
FIG. 4A is a front view showing a stator included in a three-phase motor according to a second exemplary embodiment of the present invention.
FIG. 4B is a cross-sectional view showing essential parts of the stator included in the three-phase motor according to the second exemplary embodiment of the present invention.
FIG. 5A is a front view showing a stator included in a three-phase motor according to a third exemplary embodiment of the present invention.
FIG. 5B is a cross-sectional view showing essential parts of the stator included in the three-phase motor according to the third exemplary embodiment of the present invention.
FIG. 6A is a front view showing a stator included in a conventional three-phase motor.
FIG. 6B is a cross-sectional view showing essential parts of the stator included in the conventional three-phase motor.
FIG. 7 is a model diagram illustrating connection of a winding used for the stator included in the conventional three-phase motor.

### DESCRIPTION OF EMBODIMENTS

In three-phase motors according to exemplary embodiments of the present invention, the material of wire rods used for coils forming three phases or arrangement of the coils becomes more preferable with a configuration described later. Therefore, the three-phase motors according to the exemplary embodiments of the present invention are provided in preferred states in balance of performance, cost, quality, and light weight.

In other words, the conventional three-phase motor has the following points to be improved: that is, the aluminum wire and the copper wire are connected in series via a connection portion in each of coils forming phases in the conventional three-phase motor. A process for connecting the aluminum wire and the copper wire has become a burden in manufacturing the three-phase motor.

In addition, from the point of view of performance of the three-phase motor, an electric wire for connecting the aluminum wire and the copper wire induces the following inconvenience.

That is, the three-phase motor is formed by concentrated winding by using the electric wire in which the aluminum wire and the copper wire are connected. In the three-phase motor formed by concentrated winding, the electric wire is wound around the tooth portion of the stator. A winding harmonic of the three-phase motor formed by concentrated winding becomes large.

Next, the three-phase motor is formed by distributed winding by using the electric wire in which the aluminum wire and the copper wire are connected. In the three-phase motor formed by distributed winding, the coil is formed by winding the electric wire in advance. The formed coil is inserted into a slot formed at the stator. In the three-phase motor formed by distributed winding, the electric wire is laid over the plurality of teeth portions, and therefore, the aluminum wire cannot be wound around the tooth portion included in the stator. Thus, in the three-phase motor formed by distributed winding, non-uniform heat generation is caused in a wide range inside the motor.

In particular, the three-phase motor formed by distributed winding requires three kinds of coils forming three phases, that is, an outer layer coil, an intermediate layer coil, and an inner layer coil. In the three-phase motor formed by distributed winding, the outer layer coil, the intermediate layer coil, and the inner layer coil are inserted into a stator core in this order.

In processes for manufacturing the three-phase motor formed by distributed winding, the following points are required for the outer layer coil that is first inserted into the stator core. That is, the outer layer coil is largely pushed toward the outer periphery of the stator core in order to smoothly insert the intermediate layer coil that is inserted next. Consequently, a high mechanical strength is required for the outer layer coil.

Additionally, in the case where a smaller size of a coil end is demanded, a strong pressure for shaping the coil end is applied on the outer layer coil in the process for manufacturing the stator. In view of this, the outer layer coil needs to have a higher mechanical strength.

In the case of a motor having a large increase in temperature, the motor needs to dissipate the heat generated in operating the motor to the outside of the motor.

Moreover, in the three-phase motor, the balance between currents flowing in coils forming phases may be deteriorated. In the case of a large current unbalance among the three phases, the three-phase motor needs to reduce a difference in resistance of the coils forming the phases.

In view of the above, with a configuration described later, in the three-phase motors according to the exemplary embodiments of the present invention, the material of the wire rods used for the coils forming the three phases or the arrangement of the coils becomes more preferable. Therefore, the three-phase motors according to the exemplary embodiments of the present invention are provided in the more preferred states in balance of performance, cost, quality, and light weight.

Exemplary embodiments of the present invention will be described below with reference to the attached drawings.

Note that the following exemplary embodiments are just examples embodying the present invention, and therefore, do not limit the technical scope of the present invention.

### FIRST EXEMPLARY EMBODIMENT

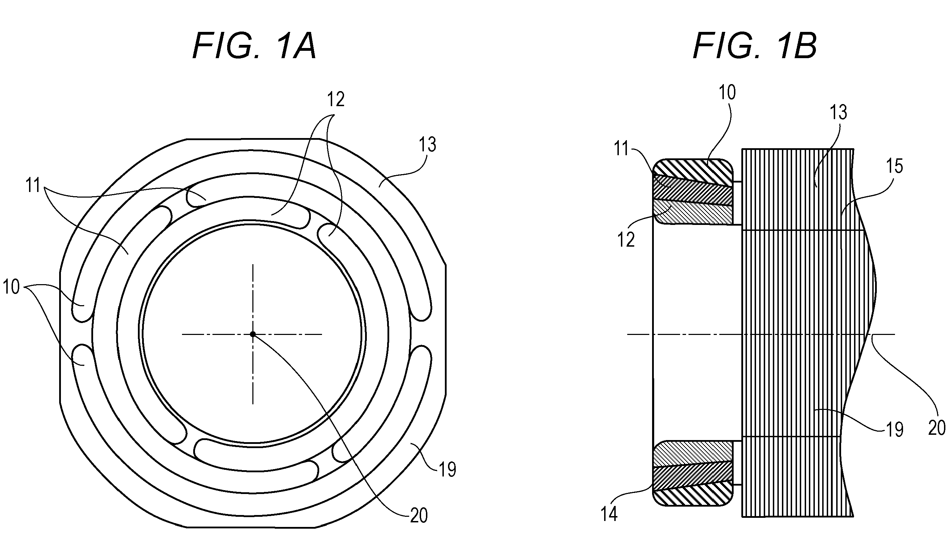

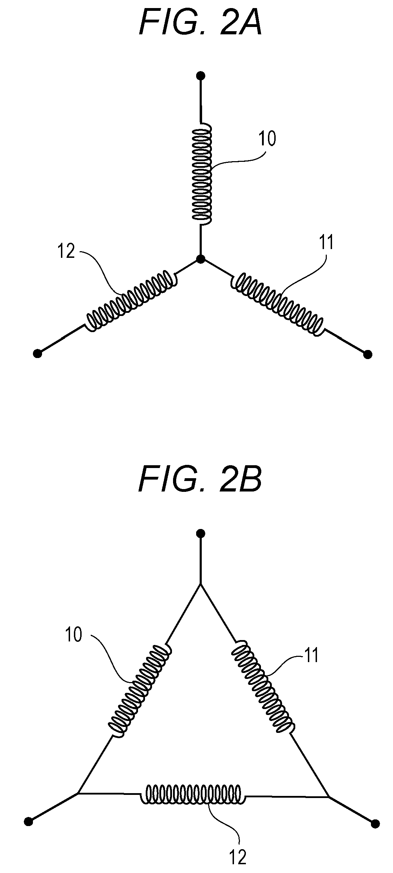

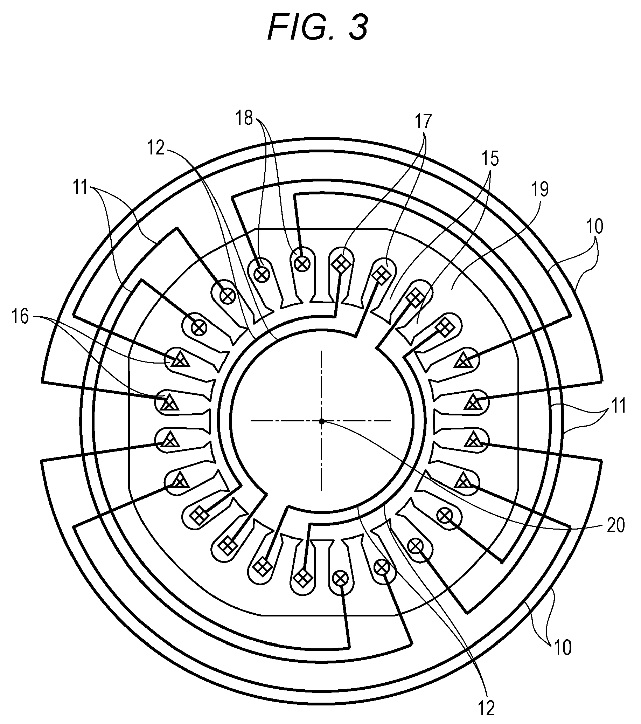

FIG. 1A is a front view showing a stator included in a three-phase motor according to a first exemplary embodiment of the present invention. FIG. 1B is a cross-sectional view showing essential parts of the stator included in the three-phase motor according to the first exemplary embodiment of the present invention. FIG. 2A is a model diagram illustrating star connection in a winding used for the stator included in the three-phase motor according to the first exemplary embodiment of the present invention. FIG. 2B is a model diagram illustrating delta connection in a winding used for the stator included in the three-phase motor according to the first exemplary embodiment of the present invention. FIG. 3 is a front view showing a stator core used for the stator included in the three-phase motor according to the first exemplary embodiment.

As shown in FIGS. 1A and 1B, a three-phase motor according to a first exemplary embodiment includes stator core 19, outer layer coil 10, inner layer coil 12, and intermediate layer coil 11.

As shown in FIG. 3, stator core 19 includes a plurality of teeth 15, a plurality of first slots 16, a plurality of second slots 17, and a plurality of third slots 18. The plurality of teeth 15 extend toward center axis 20. Each of first slots 16, second slots 17, and third slots 18 is located between adjacent teeth 15 out of the plurality of teeth 15. Stator core 19 extends toward center axis 20.

As shown in FIGS. 1A, 1B, and 3, outer layer coil 10 is inserted into first slots 16.

Inner layer coil 12 is located closer to center axis 20 than outer layer coil 10 in a direction perpendicular to center axis 20. Inner layer coil 12 is inserted into second slots 17.

Intermediate layer coil 11 is located between outer layer coil 10 and inner layer coil 12 in the direction perpendicular to center axis 20. Intermediate layer coil 11 is inserted into third slots 18.

In particular, outer layer coil 10 is formed of a wire rod having a higher mechanical strength than those of inner layer coil 12 and intermediate layer coil 11.

Moreover, the embodiment that produces particularly prominent functions and effects is as follows.

That is, outer layer coil 10 is formed of a copper wire. Inner layer coil 12 and intermediate layer coil 11 are formed of aluminum wires.

Furthermore, a detailed description will be given below with reference to the attached drawings.

As shown in FIGS. 1A and 1B, outer layer coil 10, intermediate layer coil 11, and inner layer coil 12 that constitute a three-phase winding are inserted into a slot formed on the inner circumferential side of stator 13. Coil end 14 is formed at an end in the direction of center axis 20 of stator 13.

The three-phase winding fixed to stator 13 forms star connection shown in FIG. 2A. Alternatively, the three-phase winding fixed to stator 13 forms delta connection shown in FIG. 2B.

With this configuration, the three-phase motor according to the first exemplary embodiment is formed into the following shape. That is, as outer layer coil 10, there can be used a wire rod having a higher mechanical strength than the wire rod used for intermediate layer coil 11 and the wire rod used for inner layer coil 12, for example, a copper wire. Since outer layer coil 10 is high in mechanical strength, the coil is hardly damaged.

Moreover, as intermediate layer coil 11 and inner layer coil 12, there can be used a wire rod that is low in cost and specific gravity, although it is lower in mechanical strength than the wire rod used for outer layer coil 10, for example, an aluminum wire.

The three-phase motor according to the first exemplary embodiment is a distributed winding motor. With the above-described configuration, in the three-phase motor according to the first exemplary embodiment, outer layer coil 10 is first inserted into stator core 19. Thereafter, in the three-phase motor according to the first exemplary embodiment, intermediate layer coil 11 is inserted into stator core 19.

Outer layer coil 10 inserted into stator core 19 is largely pushed toward the outer periphery of stator core 19 in such a manner as not to prevent the inserting work of intermediate layer coil 11. In this manner, a strong pressure is applied on outer layer coil 10, and therefore, a high mechanical strength is required for outer layer coil 10.

Furthermore, stator 13 may require a small dimension of coil end 14. At this time, a strong pressure for shaping coil end 14 is further applied on outer layer coil 10. Thus, in the three-phase motor according to the first exemplary embodiment, when a wire rod having a high mechanical strength is used as outer layer coil 10, outer layer coil 10 is hardly damaged. As a consequence, the three-phase motor according to the first exemplary embodiment can prevent degradation of the quality caused by coil damage.

In addition, in the three-phase motor according to the first exemplary embodiment, a relatively low pressure is applied on intermediate layer coil 11 and inner layer coil 12 other than outer layer coil 10 when coil end 14 is shaped. Therefore, the wire rod that is low in cost and specific gravity, although it is low in mechanical strength, can be used as intermediate layer coil 11 and inner layer coil 12. Thus, it is possible to provide the three-phase motor according to the first exemplary embodiment that has the balance of a cost, a quality, and a light weight in a preferred state.

### SECOND EXEMPLARY EMBODIMENT

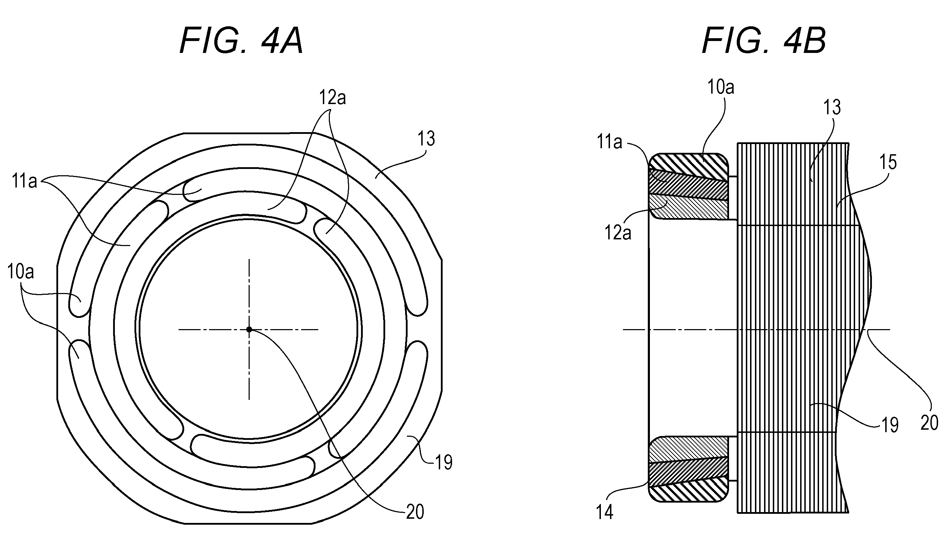

FIG. 4A is a front view showing a stator included in a three-phase motor according to a second exemplary embodiment of the present invention. FIG. 4B is a cross-sectional view showing essential parts of the stator included in the three-phase motor according to the second exemplary embodiment of the present invention.

Note that, the same constituent elements as those of the three-phase motor according to the first exemplary embodiment are designated by the same reference numerals, and therefore, the description in the first exemplary embodiment is used.

As shown in FIGS. 4A and 4B, a three-phase motor according to the second exemplary embodiment of the present invention includes stator core 19, outer layer coil 10a, inner layer coil 12a, and intermediate layer coil 11a.

As shown in FIG. 3, stator core 19 includes a plurality of teeth 15, a plurality of first slots 16, a plurality of second slots 17, and a plurality of third slots 18. The plurality of teeth 15 extend toward center axis 20. Each of first slots 16, second slots 17, and third slots 18 is located between adjacent teeth 15 out of the plurality of teeth 15. Stator core 19 extends toward center axis 20.

As shown in FIGS. 4A, 4B, and 3, outer layer coil 10a is inserted into first slots 16.

Inner layer coil 12a is located closer to center axis 20 than outer layer coil 10a in a direction perpendicular to center axis 20. Inner layer coil 12a is inserted into second slots 17.

Intermediate layer coil 11a is located between outer layer coil 10a and inner layer coil 12a in the direction perpendicular to center axis 20. Intermediate layer coil 11a is inserted into third slots 18.

In particular, outer layer coil 10a and inner layer coil 12a are formed of wire rods having a higher heat conductivity than that of intermediate layer coil 11a.

Moreover, the embodiment that produces particularly prominent functions and effects is as follows.

That is, outer layer coil 10a and inner layer coil 12a are formed of copper wires. Intermediate layer coil 11a is formed of an aluminum wire.

Furthermore, a detailed description will be given below with reference to the attached drawings.

As shown in FIGS. 4A and 4B, outer layer coil 10a, intermediate layer coil 11a, and inner layer coil 12a that constitute a three-phase winding are inserted into a slot formed on the inner circumferential side of stator 13. Coil end 14 is formed at an end in the direction of center axis 20 of stator 13.

With this configuration, the three-phase motor according to the second exemplary embodiment is formed into the following shape. That is, as outer layer coil 10a and inner layer coil 12a, there can be used the wire rods having a higher heat conductivity than the wire rod used for intermediate layer coil 11a, for example, copper wires.

Moreover, as intermediate layer coil 11a, there can be used the wire rod that is low in cost and specific gravity, although it is lower in heat conductivity than the wire rods used for outer layer coil 10a and inner layer coil 12a, for example, an aluminum wire.

The three-phase motor according to the second exemplary embodiment is a distributed winding motor. The three-phase motor according to the second exemplary embodiment may be driven in the environment in which the inside temperature of the three-phase motor largely increases.

At this time, with the above-described configuration, outer layer coil 10a and inner layer coil 12a are located at a site where the three-phase motor according to the second exemplary embodiment is frequently brought into contact with air or the like that is present outside the three-phase motor. In other words, in the three-phase motor according to the second exemplary embodiment, the surface area of each of outer layer coil 10a and inner layer coil 12a that are brought into contact with air or the like that is present outside the three-phase motor is larger than that of intermediate layer coil 11a. In view of this, the wire rods having a higher heat conductivity than that of intermediate layer coil 11a are used as outer layer coil 10a and inner layer coil 12a.

As a consequence, heat generated inside the three-phase motor is readily dissipated to the outside of the three-phase motor through outer layer coil 10a and inner layer coil 12a which are formed of the wire rods having a higher heat conductivity. Therefore, the three-phase motor according to the second exemplary embodiment can suppress an increase in inside temperature of the three-phase motor.

In contrast, intermediate layer coil 11a in the three-phase motor according to the second exemplary embodiment is hardly brought into contact with air or the like that is present outside the three-phase motor. In other words, in the three-phase motor according to the second exemplary embodiment, the surface area of intermediate layer coil 11a that is brought into contact with air or the like that is present outside the three-phase motor is smaller than those of outer layer coil 10a and inner layer coil 12a. Therefore, the wire rod that is low in cost and specific gravity, although it is low in heat conductivity than those of outer layer coil 10a and inner layer coil 12a, can be used as intermediate layer coil 11a. Thus, it is possible to provide the three-phase motor according to the second exemplary embodiment that has the balance of the dissipation of heat generated inside the motor, a cost, and a light weight in a preferred state.

### THIRD EXEMPLARY EMBODIMENT

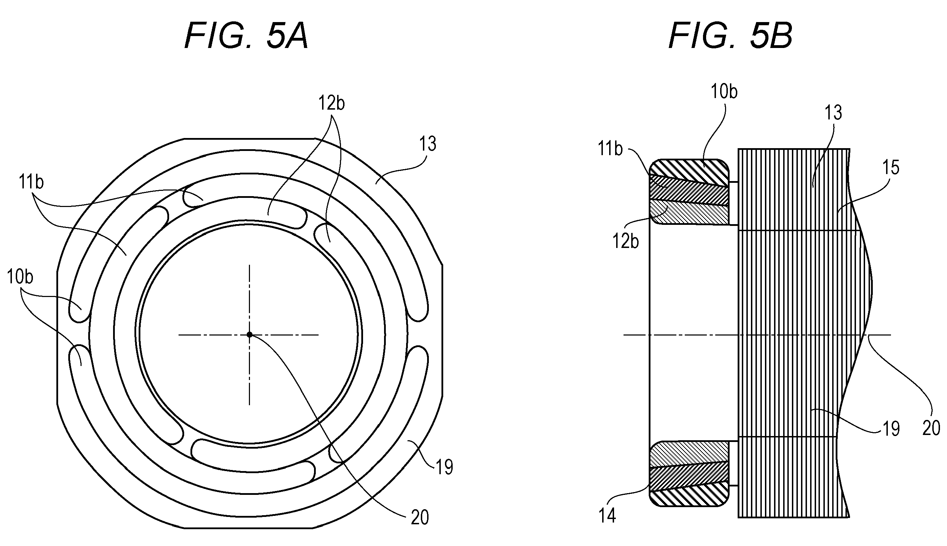

FIG. 5A is a front view showing a stator included in a three-phase motor according to a third exemplary embodiment of the present invention. FIG. 5B is a cross-sectional view showing essential parts of the stator included in the three-phase motor according to the third exemplary embodiment of the present invention.

Note that, the same constituent elements as those of the three-phase motors in the first and second exemplary embodiments are designated by the same reference numerals, and therefore, the description in the first and second exemplary embodiment is used.

As shown in FIGS. 5A and 5B, a three-phase motor according to a third exemplary embodiment includes stator core 19, outer layer coil 10b, inner layer coil 12b, and intermediate layer coil 11b.

As shown in FIG. 3, stator core 19 includes a plurality of teeth 15, a plurality of first slots 16, a plurality of second slots 17, and a plurality of third slots 18. The plurality of teeth 15 extend toward center axis 20. Each of first slots 16, second slots 17, and third slots 18 is located between adjacent teeth 15 out of the plurality of teeth 15. Stator core 19 extends toward center axis 20.

As shown in FIGS. 5A, 5B, and 3, outer layer coil 10b is inserted into first slots 16.

Inner layer coil 12b is located closer to center axis 20 than outer layer coil 10b in a direction perpendicular to center axis 20. Inner layer coil 12b is inserted into second slots 17.

Intermediate layer coil 11b is located between outer layer coil 10b and inner layer coil 12b in the direction perpendicular to center axis 20. Intermediate layer coil 11b is inserted into third slots 18.

In particular, outer layer coil 10b and intermediate layer coil 11b are formed of wire rods having a smaller resistivity than that of inner layer coil 12b.

Moreover, the embodiment that produces particularly prominent functions and effects is as follows.

That is, outer layer coil 10a and intermediate layer coil 11b are formed of copper wires. Inner layer coil 12b is formed of an aluminum wire.

Furthermore, a detailed description will be given below with reference to the attached drawings.

As shown in FIGS. 5A and 5B, outer layer coil 10b, intermediate layer coil 11b, and inner layer coil 12b that constitute a three-phase winding are inserted into a slot formed on the inner circumferential side of stator 13. Coil end 14 is formed at an end in the direction of center axis 20 of stator 13.

With this configuration, the three-phase motor according to the third exemplary embodiment is formed into the following shape. That is, as outer layer coil 10b and intermediate layer coil 11b, there can be used the wire rods having a smaller resistivity than the wire rod used for inner layer coil 12b, for example, the copper wires.

Moreover, as inner layer coil 12b, there can be used the wire rod that is low in cost and specific gravity, although it is greater in resistivity than outer layer coil 10b and intermediate layer coil 11b, for example, the aluminum wire.

The three-phase motor according to the third exemplary embodiment is a distributed winding motor.

In general, current variations between coils forming phases of the three-phase motor, that is, a so-called current unbalance may occur in driving the three-phase motor. In the case where the current unbalance between the coils is large, a difference in resistivity between the wire rods forming the coils should be effectively reduced as much as possible.

In the three-phase motor according to the third exemplary embodiment, from the viewpoint of the structure, the circumferential length of each of outer layer coil 10b and intermediate layer coil 11b becomes greater than that of inner layer coil 12b. If the circumferential length is great in the case of using the same wire rod, the resistivity of each of outer layer coil 10b and intermediate layer coil 11b becomes greater.

In view of this, in the three-phase motor according to the third exemplary embodiment, wire rods having a smaller resistivity than that of inner layer coil 12b are used for outer layer coil 10b and intermediate layer coil 11b.

Thus, a difference in resistivity among the phase coils forming the three phases becomes small. Consequently, the three-phase motor according to the third exemplary embodiment can suppress the current unbalance among the coils forming the phases.

Meanwhile, in the three-phase motor according to the third exemplary embodiment, the circumferential length of inner layer coil 12b is shorter than that of each of outer layer coil 10b and intermediate layer coil 11b, and therefore, the resistivity of inner layer coil 12b is small. In view of this, even if inner layer coil 12b has a larger resistivity than those of outer layer coil 10b and intermediate layer coil 11b, the wire rod that is low in cost and specific gravity can be used for inner layer coil 12b. Therefore, it is possible to provide the three-phase motor according to the third exemplary embodiment that has the balance of the current unbalance occurring among the phase coils, a cost, and a light weight in a preferred state.

As is obvious from the above-described descriptions, the three-phase motors according to the exemplary embodiments of the present invention are distributed windings. In the three-phase motors according to the exemplary embodiments, the coil forming each of the three phases has the following feature. That is, the coil forming each phase is formed of the single wire rod. The coils forming the three phases are formed of the plurality of wire rods.

In the above-described three-phase motors, the wire rod forming each phase coil is appropriately selected according to the purpose.

In other words, the three-phase motors according to the exemplary embodiments of the present invention take the following configurations in order to prevent any damage on the outer layer coils in manufacturing the three-phase motors.

Specifically, the wire rod used for the outer layer coil has the higher mechanical strength than the wire rods used for the inner layer coil and the intermediate layer coil.

The three-phase motors according to the exemplary embodiments of the present invention principally take the following configurations in order to enhance dissipation of the heat generated in the three-phase motors.

Specifically, the wire rods used for the outer layer coil and the inner layer coil have a higher heat conductivity than the wire rod used for the intermediate layer coil.

Moreover, the three-phase motors according to the exemplary embodiments of the present invention principally take the following configurations in order to suppress the occurrence of the current unbalance among the three phases.

Specifically, the wire rods used for the outer layer coil and the intermediate layer coil have a smaller resistivity than that of the inner layer coil.

Note that, the three-phase motors in the above-described exemplary embodiments may be motors other than a three-phase induction motor as long as the distributed winding is applied. The three-phase motors according to the above-described exemplary embodiments may be a three-phase DC motor.

Additionally, the wire rod used for each of the phase coils may be wires other than an aluminum wire and a copper wire. The wire rod used for each of the phase coils may be a copper clad wire obtained by applying a copper coating onto an aluminum wire.

### INDUSTRIAL APPLICABILITY

The present invention can provide the three-phase motors that can take balance in indicators of motor performance, a cost, a quality, and light weight. The three-phase motors of the present invention are applicable to a three-phase induction motor, a three-phase DC motor, and the like.

### REFERENCE MARKS IN THE DRAWINGS

- 10, 10a, 10b: outer layer coil
- 11, 11a, 11b: intermediate layer coil
- 12, 12a, 12b: inner layer coil
- 13, 13a: stator
- 14: coil end
- 15: teeth
- 16: first slot
- 17: second slot
- 18: third slot
- 19: stator core
- 20: center axis
- 40: aluminum wire
- 41: copper wire
- 42: tooth portion
- 43: connection portion

## Claims

1. A three-phase motor comprising:
a stator core extending in a direction of a center axis,
the stator core including
a plurality of teeth extending toward the center axis, and
a first slot, a second slot, and a third slot which are positioned between adjacent teeth out of the plurality of teeth;
an outer layer coil to be inserted into the first slot;
an inner layer coil to be inserted into the second slot, the inner layer coil being located closer to the center axis than the outer layer coil in a direction perpendicular to the center axis; and
an intermediate layer coil to be inserted into the third slot, the intermediate layer coil being located between the outer layer coil and the inner layer coil in a direction perpendicular to the center axis,
wherein the outer layer coil is formed of a wire rod having a higher mechanical strength than those of the inner layer coil and the intermediate layer coil.

2. The three-phase motor according to claim 1, wherein
the outer layer coil is formed of a copper wire, and
the inner layer coil and the intermediate layer coil are formed of aluminum wires.

3. A three-phase motor comprising:
a stator core extending in a direction of a center axis,
the stator core including
a plurality of teeth extending toward the center axis, and
a first slot, a second slot, and a third slot which are positioned between adjacent teeth out of the plurality of teeth;
an outer layer coil to be inserted into the first slot;
an inner layer coil to be inserted into the second slot, the inner layer coil being located closer to the center axis than the outer layer coil in a direction perpendicular to the center axis; and
an intermediate layer coil to be inserted into the third slot, the intermediate layer coil being located between the outer layer coil and the inner layer coil in a direction perpendicular to the center axis,
wherein the outer layer coil and the inner layer coil are formed of wire rods having a higher heat conductivity than that of the intermediate layer coil.

4. The three-phase motor according to claim 3, wherein
the outer layer coil and the inner layer coil are formed of copper wires, and
the intermediate layer coil is formed of an aluminum wire.

5. A three-phase motor comprising:
a stator core extending in a direction of a center axis,
the stator core including
a plurality of teeth extending toward the center axis, and
a first slot, a second slot, and a third slot which are positioned between adjacent teeth out of the plurality of teeth;
an outer layer coil to be inserted into the first slot;
an inner layer coil to be inserted into the second slot, the inner layer coil being located closer to the center axis than the outer layer coil in a direction perpendicular to the center axis; and
an intermediate layer coil to be inserted into the third slot, the intermediate layer coil being located between the outer layer coil and the inner layer coil in a direction perpendicular to the center axis,
wherein the outer layer coil and the intermediate layer coil are formed of wire rods having a smaller resistivity than that of the inner layer coil.

6. The three-phase motor according to claim 5, wherein
the outer layer coil and the intermediate layer coil are formed of copper wires, and
the inner layer coil is formed of an aluminum wire.

7. The three-phase motor according to any one of claims 1 to 6, the three-phase motor being formed by distributed winding.
